# EUROPEAN PATENT APPLICATION

(11) **EP 1 551 158 A2**
(43) Date of publication of application: **06.07.2005**
(21) Application number: 04023629.1
(22) Date of filing: 04.10.2004
(51) Int. Cl.: H04M 1/725, H04Q 7/38, H04M 3/42, G04G 9/00

(54) **System and method for the call management in a called mobile phone dependent on its local time zone**

(30) Priority: 31.12.2003 US 749778
(71) Applicant: Genesys Telecommunications Laboratories, Inc., San Francisco, CA 94103 (US)
(72) Inventor: Perlmutter, Michael S., San Francisco, CA 94116 (US)
(74) Representative: Dreiss, Fuhlendorf, Steimle & Becker

(57) **Abstract**

In a mobile telephone system, a method for call treatment has steps of a) determining if a called party for a call placed by a caller is roaming; b) if yes in a) determining the time of day "TOD" at the called party's location; and c) informing the caller of the TOD. In an optional method there are steps of a) determining if a subscriber to the system party for a call placed by a caller is roaming; b) if yes in a) determining the TOD at the subscriber's location; and c) checking for and applying treatment options set by the subscriber if the TOD in step b) falls within a preset range.

## Description

### Field of the Invention

The present invention is in the field of telephony and pertains more particularly to international mobile telephone use.

### Background of the Invention

Development of cellular and satellite-enables telephone services have provided new dimensions of freedom to both business and personal users. Through such systems a user may have a telephone number, such as in a particular area code in the United States, and still place and receive calls in virtually any part of the World, just as though the user were at home.

Typically a user of a mobile telephone system is assigned to a Home network area, which may be the extent of a large city or a county in a more rural area. For even more convenience many mobile telephone service plans offer roaming services for handling calls in parts of the USA for example, outside the user's Home area. Further, a user may also subscribe in most systems to International roaming, through which the user may place and receive calls in many parts of the World completely remote from the user's Home area. A user with a Home area in Central California, for example, with International roaming may place and receive calls in most areas of Europe and Asia.

A problem with International roaming as practiced by most mobile systems begins with the fact of the user having a local telephone number for the mobile telephone. A caller dialing that local number has no way of knowing whether the user he or she is trying to call is actually near home, or may be in some remote location in a completely different time zone. This leads to many situations where a caller may place a call to a user of a mobile network during the business day for the caller, for example, and the called party may wake to a ringing telephone in the middle of the night on the other side of the world.

What is clearly needed is a system and method that interrupts a caller placing a call to a user of a mobile network, which user happens to be in a time zone where the time-of-day is such that the user might well wish to be left undisturbed, and that also allows the user to configure the service for certain times of day or for other circumstances.

### Summary of the Invention

In an embodiment of the present invention, in a mobile telephone system, a method for call treatment is provided comprising (a) upon receiving a call placed by a caller for a user, determining a geographic location for the user's telephone in the system; (b) determining the time-of-day (TOD) at the telephone's location; and (c) informing the caller of the TOD.

In some embodiments the method further comprises a step for providing the caller an option of going directly to voice mail without sending a ring event, or sending a ring event for the call. Also in some embodiments the caller is enabled by selection to control the ring event. Still in some embodiments the ring events selected include at least one of a light flash, a buzz or a ring.

In another embodiment of the invention, in a mobile telephone system, a method for call treatment is provided, comprising (a) determining a geographic location for a subscriber to the system for a call placed by a caller; (b) determining the TOD at the subscriber's location; and (c) checking for and applying treatment options set by the subscriber if the TOD in step (b) falls within a preset range.

In some embodiments the method further comprises setting treatment options by input from the subscriber. Also in some embodiments the treatment options include a password provided by the subscriber. Still in some embodiments the treatment options include an emergency procedure wherein the caller is prompted for the password to place a call within an otherwise restricted time of day.

In yet another aspect of the invention a call roaming system comprising a facility for determining a geographic location of a called party for a call placed by a caller is provided, the system determining the time-of-day (TOD) in the called party's location, and informing the caller of the destination TOD.

In some embodiments the system further provides the caller an option of going directly to voice mail without sending a ring event, or sending a ring event for the call. Also in some embodiments the system enables the caller to control the ring event by selection. Still in some embodiments the ring events selected include at least one of a light flash, a buzz or a ring.

In still another aspect of the invention a call treatment system comprises a facility for determining a geographic location of a called party for a call placed by a caller, determines the time of day (TOD) in the called party's location, and checks for and applies treatment options set by the called party if the TOD determined falls within a preset range.

In some embodiments the system further comprises setting treatment options by input from the called party. Also in some embodiments the treatment options include a password provided by the called party. In other embodiments the treatment options include an emergency procedure wherein the caller is prompted for the password to place a call within an otherwise restricted time of day.

In still another aspect of the invention a machine-readable medium is provided having stored thereon a set of instructions that cause a machine to perform a method comprising (a) determining a geographic location of a called party for a call placed by a caller; (b) determining the TOD at the called party's location; and (c) informing the caller of the TOD.

In another embodiment a machine-readable medium is provided having stored thereon a set of instructions that cause a machine to perform a method comprising (a) determining a geographic location of a subscriber to the system for a call placed by a caller; (b) determining the TOD at the subscriber's location; and (c) checking for and applying treatment options set by the subscriber if the TOD in step (b) falls within a preset range.

In various embodiments of the invention taught in enabling detail below, for the first time a method and apparatus is provided that informs callers when calling mobile telephones of the time-of-day in the zone where the called party happens to be, and in some cases provides automatic or semiautomatic treatment options.

### Brief Description of the Drawing Figures

- Fig.1: is a simplified diagram of a mobile telephone system in an embodiment of the present invention.
- Fig. 2: is a diagram depicting operation of a system in an embodiment of the present invention.
- Fig. 3: is a flow chart showing steps in a method according to an embodiment of the present invention.

### Description of the Preferred Embodiments

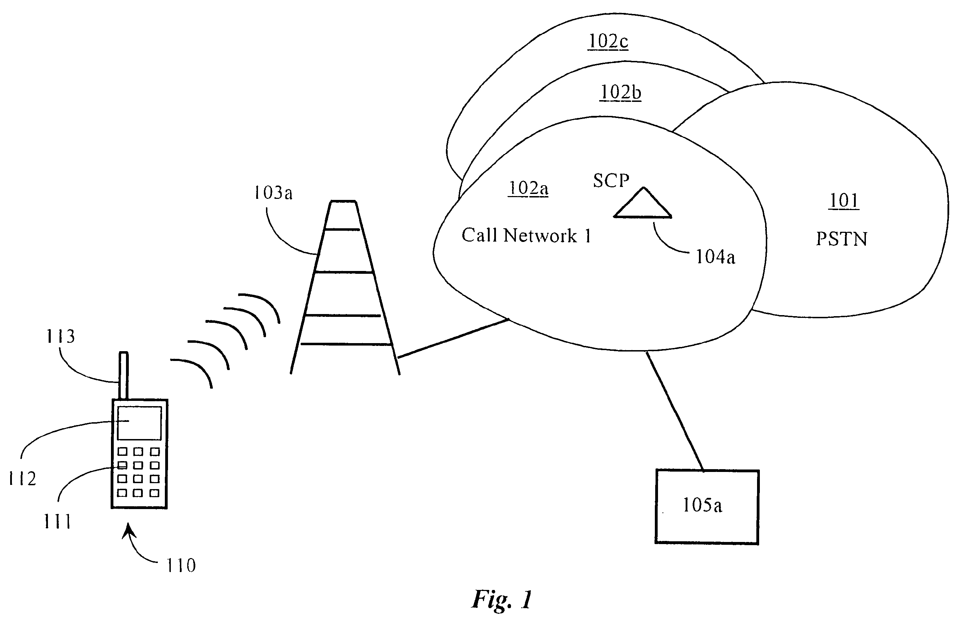

Fig. 1 is a simplified diagram of a mobile telephone system interconnected with other networks in an embodiment of the present invention.

In this example a cellular telephone 110 having a keyboard 11, a display 112 and an antenna 113 is connected through a base station with appropriate equipment as is known in the art, which also has a transmission and reception tower (or antenna) 103a, to a cellular telephone network 102a. Cellular network 102a is connected in turn to a public switched telephone network (PSTN) 101a. Other cellular networks 102b and 102c are shown as well. It will be apparent to the skilled artisan that there may be many bases stations, there may be many more networks than those illustrated in this example, and that PSTN 101a is not necessarily a single, homogeneous network, but rather a collection of many sub-networks of different telephone carriers, both local and international, long distance, and so on. The relative simplicity of the system shown in Fig. 1 is considered sufficient to illustrate features of an embodiment of the present invention.

When a call comes through the network for telephone 110 the call is delivered in this example to a service control point (SCP) 104a in the cellular network, which is a facility as is known in the art with intelligence (logic) for performing certain functions in call placement and delivery. One of the functions of SCP 104a is to determine the approximate location of telephone 110. If the SCP locates the telephone the call is then routed to the base station for the area where the telephone happens to be. The base station transmits a ring signal to the telephone to cause the telephone to alert the user by whatever alert system the telephone is configured to use, such as buzz, ring and so on.

In some cases the signals sent to the telephone also cause information to appear on display 112 of telephone 110, such as, for example, the name and/or telephone number of the caller. With this information the user has the option to answer the call or to reject the call by pressing buttons on keyboard 111 or by other input means, and hence send the call back via SCP 104a into, for example, a voice mail system 105a. State-of-the-art voice mail systems are quite intelligent and capable, and may approximate the functions of a voice response unit (VRU). A state-of-the-art voice mail system may also give the caller options such as to send a page, to edit his message, and so on.

The skilled artisan will recognize that there may be many variations in the functions of SCP 104a, depending at least in part on the network host. In some networks the redirect of the voice message may be initiated by a switch inside cell network 102a rather than by an SCP, but an SCP may have a service profile for specific telephone 110. Moreover, even in a case where the actual routing of the call happens by such as a switch, the SCP typically provides information to that switch, such as how many rings should occur before the call is bounced into voice mail. If there is no voice mail, or in case the voice mail is not available, due to such as overload, failure, and so on, the system may be programmed to play an appropriate default message to the caller.

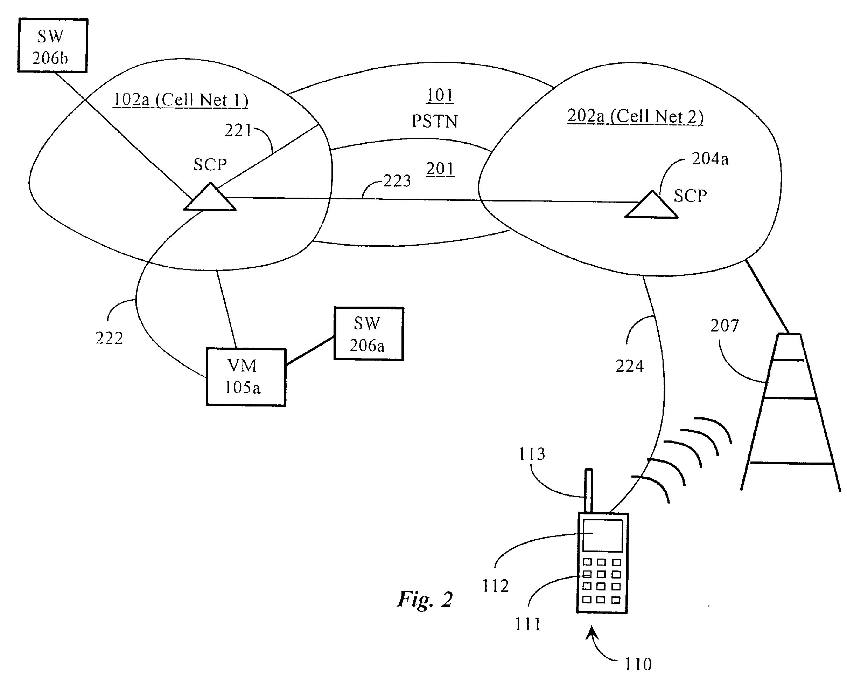

Figure 2 shows a situation in which a user of telephone 110 of Fig. 1 is out of the area of base station 103a, and also out of what is termed in the art the home area of telephone 110 (roaming), but is still enabled to make and receive calls. In this example the roaming user has telephone 110 connected through a base station 207 to an SCP 204a in cellular telephone network 202a.

In an embodiment of the invention, a call 221 may originate, for example, anywhere in PSTN, the call addressed for telephone 110, and may be delivered to SCP 104a in cellular network 102a as described above. The PSTN system, of course, has no knowledge of the user roaming, and the destination number is the number of telephone 110 in network 102a.

SCP 104a may have logic to follow treatment option rules. SCP 104a potentially knows that telephone 110 is roaming, either by input from the user of telephone 110 or by the fact of the user placing a call through or just simply registering on network 202a. In this case SCP 104a may simply forward the incoming call to voice mail 105a (path 222). In an optional case, feature logic may be resident in voice mail 105a rather than at SCP 104a. In some cases, such as in the case that the user has subscribed to roaming service, the call may be routed to network 202a (path 223) to be delivered to the user at telephone 110 (path 224). Again, if the user does not answer after a certain preprogrammed number of rings, the call may then transferred to voice mail system 105a either directly or, in some cases, after the caller is prompted to enter the telephone number again, because due to the translation between systems 102a and 202a, the called number may have been lost.

In the situation depicted in Fig. 2, with the user roaming and using network 202a, system 202a may assign a temporary alias number to telephone 110, which can be used by SCP 204a to route the call, and then the configured treatment options can decide whether to deliver the call, bounce it back to network 102a immediately, or return the call as undeliverable after a certain number of rings. If system 102a has no notification of the presence of telephone 110 in any other system, it may defaults immediately to voice mail 105a.

If and when SCP 204a assigns a local alias number totelephone 110, it typically does so after verifying that the associated user of telephone 110 has rights and agreements to roam in system 202a, and when doing so notifies primary SCP 104a of the location of telephone 110. Thus SCP 104a executing software 206b, or VRU 105a executing software 206a, can know the location of telephone 110.

It is an object of the present invention to provide unique features to call forwarding, particularly roaming in cellular telephone networks. To provide these unique features the system needs to know the time of day for a network where a user may be roaming, such as the user of telephone 110 roaming through network 202a as shown in Fig. 2 and described just above. The time of day needed is easily determined by the geographic location of network 202a and the well-known international time zones, which may be made available to the instances of software executed by various processors in such as SCPs and VM systems in embodiments of the present invention.

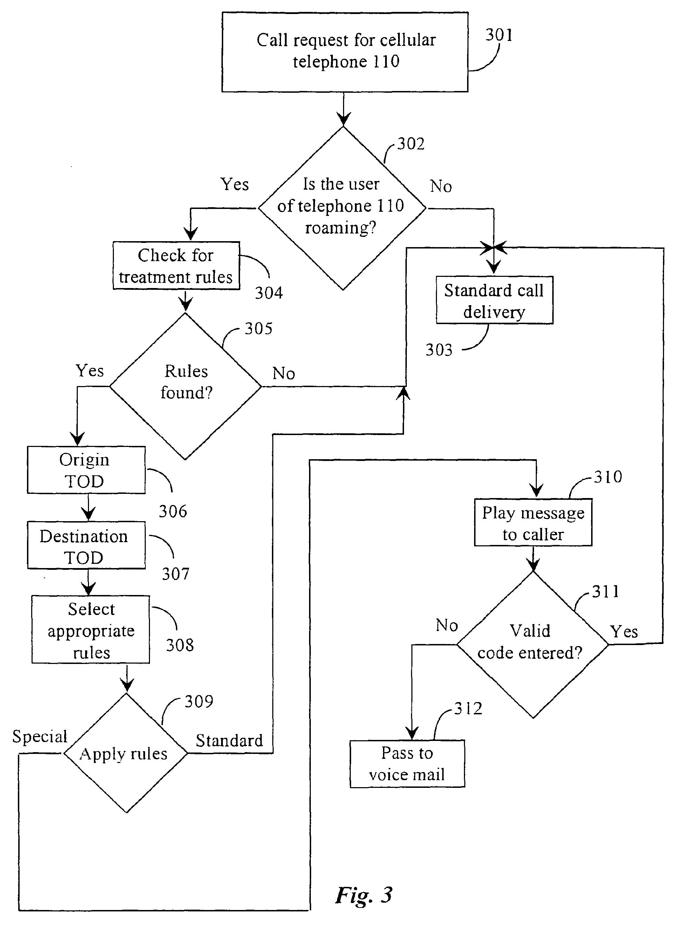

Figure 3 illustrates a flow chart of a process of treatment options according to an embodiment the present invention. These treatment options may be made a part of, for example, software 206a and/or 206b of Fig. 2. The skilled artisan will understand that this description is exemplary, and that applicable logic to provide the treatment options described in this specification as embodiments of the present invention may be provided in a variety of ways to execute on processors or CPUs at a variety of locations, singularly or in combination(s).

At step 301 in Fig. 3, a call request for cellular telephone 110 arrives, for example at SCP 104a of Fig. 1 and Fig. 2, enhanced by logic 206b. In step 302, it is determined by the software whether or not the caller is roaming. If the caller is not roaming (No), operation proceeds to standard call delivery indicated by in step 303.

If it is determined in step 302 that the called user is roaming, the process moves to step 304, and the logic checks the system for treatment rules, such as roaming and/or time-of-day rules.

In some embodiments the user is enabled to enter treatment rules, for example, via a carrier-provided web site, or by selecting options from an options menu by telephone, by a combination of these two methods, or by any of many other methods of selection and configuration that are well known in the art.

At step 305 the system routes the call according to whether or not any rules are applicable. If no treatment rules are applicable (No), the call is passed back to step 303 for standard call delivery. If treatment rules are applicable (Yes at step 305) the system checks at step 306 optionally for current time-of-day (TOD) at the call origination site, then at step 307 checks for the TOD at the destination where the user is roaming, and then applies the appropriate set of treatment rules in step 308.

Depending at least in part on the delivery options of the rules selected in 308, in step 309, the call may be either routed back to step 303 for standard call delivery, or routed on (Special) to step 310 for a message to be played the caller. The message can take a variety of forms, one of which may be that the user is not accepting calls at this time, unless the call is an emergency. In case it is an emergency call, the caller may enter an emergency access code (if the caller knows the access code) in step 311 (Yes), and the call is then routed back to step 303 for standard call delivery. If the caller does not enter an emergency access code (No), the call is passed the call directly to voice mail, without even ringing the phone.

The skilled artisan will recognize that there may be many variations made in embodiments described above without departing from the spirit and scope of the invention. For example, it may not be necessary to determine the TOD at the call origination point, and the TOD at the destination may be sufficient. There could also be configuration for a selective alert. An example might be complete silencing with perhaps a flashing light or LED on the phone, a vibration, or a normal audible ring. Where typically these options are programmed into the telephone itself, by having the software manipulate the caller ID or similar signaling delivered to the telephone, the system as a whole may activate certain specific responses on the side of the phone, rather than leaving it entirely to the telephone to decide which rings to use. Hence, in a call treatment option setup menu, either on a web site or accessible by telephone, the telephone may be programmed to react in certain ways based on time-of-day rules input by the user.

As another example, to optimize ease of usage, certain default options may be offered as an easy-to-use model for international travelers, for coast-to-coast travelers, and so on. These models may be offered as an additional option at additional cost to certain high-end roaming customers, or in other cases may be included in certain packages as standard.

In an alternative embodiment a treatment option may apply to a local telephone, so the user may select an option saying that between 10 p.m. and 7 a.m. his telephone must not ring, or that he wants a special ring that only rings with reduced volume, or a flashing light instead of a ring, or a vibration instead of a ring, and so on.

In another alternative embodiment a service might be applied wherein, if a user is roaming, the caller is informed of the TOD at the destination and offered an option to go to voice mail or to place the call through in any case. In this option the caller has control. There may also be otherwise incompatible options wherein certain options have priority. For example, the caller may be offered a choice based on the destination TOD, but if the user at the destination has set a block, the call would still not go through. There are many options. For these and other reasons the invention is to be afforded the breadth of the claims that follow.

In examples of the invention described above, usually called embodiments of the invention, the term roaming has been used to mean the user of the mobile system is away from his home area. In the art at the time of filing the present application the term roaming is often used to mean the user is on another network than his provided network. That is, there are now mobile networks that are national in scope, and even international in scope, and the term roaming should not be considered to limit application or scope of the invention. Many features of the invention may be useful wherever the user of a mobile network may be, and there is typically no need to determine whether the user is roaming; rather, determination of the user's time zone may be sufficient in most cases.

## Claims

1. In a mobile telephone system, a method for call treatment comprising:
(a) upon receiving a call placed by a caller for a user, determining a geographic location for the user's telephone in the system;
(b) determining the time-of-day (TOD) at the telephone's location; an
(c) informing the caller of the TOD.

2. The method of claim 1 further comprising providing the caller an option of going directly to voice mail without sending a ring event, or sending a ring event for the call.

3. The method of claim 2 wherein the caller is enabled by selection to control the ring event.

4. The method of claim 3 wherein the ring events selected include at least one of a light flash, a buzz or a ring.

5. In a mobile telephone system, a method for call treatment comprising:
(a) determining a geographic location for a subscriber to the system for a call placed by a caller;
(b) determining the TOD at the subscriber's location; an
(c) checking for and applying treatment options set by the subscriber if the TOD in step (b) falls within a preset range.

6. The method of claim 5 further comprising setting treatment options by input from the subscriber.

7. The method of claim 6 wherein the treatment options include a password provided by the subscriber.

8. The method of claim 7 wherein the treatment options include an emergency procedure wherein the caller is prompted for the password to place a call within an otherwise restricted time of day.

9. A call roaming system comprising a facility for determining a geographic location of a called party for a call placed by a caller, determining the time of day (TOD) in the called party's location, and informing the caller of the destination TOD.

10. The system of claim 9 wherein the system further provides the caller an option of going directly to voice mail without sending a ring event, or sending a ring event for the call.

11. The system of claim 10 wherein the system enables the caller to control the ring event by selection.

12. The system of claim 11 wherein the ring events selected include at least one of a light flash, a buzz or a ring.

13. A call treatment system comprising a facility for determining a geographic location of a called party for a call placed by a caller, determining the time of day (TOD) in the called party's location, and checking for and applying treatment options set by the called party if the TOD determined falls within a preset range.

14. The system of claim 13 further comprising setting treatment options by input from the called party.

15. The system of claim 14 wherein the treatment options include a password provided by the called party.

16. The system of claim 15 wherein the treatment options include an emergency procedure wherein the caller is prompted for the password to place a call within an otherwise restricted time of day.

17. A machine-readable medium having stored thereon a set of instructions that cause a machine to perform a method comprising:
(a) determining a geographic location of a called party for a call placed by a caller;
(b) determining the TOD at the called party's location; and
(c) informing the caller of the TOD.

18. A machine-readable medium having stored thereon a set of instructions that cause a machine to perform a method comprising:
(a) determining a geographic location of a subscriber to the system for a call placed by a caller;
(b) determining the TOD at the subscriber's location; and
(c) checking for and applying treatment options set by the subscriber if the TOD in step (b) falls within a preset range.
